Europäisches Patentamt

European Patent Office

Office européen des brevets

(19)

(11) Numéro de publication: **0 202 136**
**B1**

## FASCICULE DE BREVET EUROPEEN

(12)

(45) Date de publication du fascicule du brevet:
04.07.90

(51) Int. Cl.⁵: **F02P 9/00**

(21) Numéro de dépôt: 86400747.1

(22) Date de dépôt: 08.04.86

(54) **Procédé et dispositif de limitation du régime d'un moteur à combustion interne à allumage électronique.**

(30) Priorité: 19.04.85 FR 8505973

(43) Date de publication de la demande:
20.11.86 Bulletin 86/47

(45) Mention de la délivrance du brevet:
04.07.90 Bulletin 90/27

(84) Etats contractants désignés:
**DE GB IT NL SE**

(56) Documents cités:
**DE-A- 2 311 267**
**DE-A- 3 303 675**
**FR-A- 2 056 130**
**FR-A- 2 343 128**
**US-A- 4 163 431**
**US-A- 4 448 179**

(73) Titulaire: **Siemens Aktiengesellschaft,
Wittelsbacherplatz 2, D-8000 München 2(DE)**

(72) Inventeur: **Vernieres, Francois, 33, rue A. Delieux,
F-31400 Toulouse(FR)**
Inventeur: **Luna, Pierre, 15, rue du Mont Dore,
F-31100 Toulouse(FR)**

## Description

La présente invention concerne un procédé et un dispositif de limitation du régime d'un moteur à combustion interne à allumage électronique.

Il est déjà connu de protéger un moteur à combustion interne contre les sur-régimes en agissant au niveau de l'allumage lorsque le régime maximal autorisé du moteur est atteint.

Une première solution consiste à supprimer totalement l'arc électrique aux bornes des bougies d'allumage quand le moteur atteint son régime maximal par inhibition de la commande d'allumage. Cette méthode a, entre autres, pour conséquence néfaste le passage de carburant imbrûlé dans les conduits d'échappement et l'apparition de secousses désagréables pour le conducteur à chaque coupure et remise en service de l'allumage.

Dans la demande DE 3.303.675 la suppression de l'arc est obtenue par réduction progressive de l'énergie effectivement emmagasinée dans l'organe de stockage d'énergie (ici le primaire de la bobine). Cette réduction se fait du niveau maximal au niveau zéro dans une plage de régime moteur d'environ 50 tours/minute au delà du régime maximal autorisé. Cette disposition n'élimine pas de façon déterminante les défauts mentionnés ci-dessous car elle conduit inéluctablement à la suppression de l'arc d'étincelle.

Le brevet GB.A.. 1 513 796 tente de remédier à ces inconvénients au moyen d'un dispositif qui assure une diminution à zéro de l'angle d'avance à l'allumage lorsque le moteur dépasse son régime maximal. Toutefois, ce dispositif n'est pas réellement satisfaisant car il provoque une diminution de couple du moteur insuffisante pour limiter son régime avec un faible temps de réponse. En réalité, ce régime continue à croître progressivement avant de diminuer, ce qui entraîne soit un risque de dégradation du moteur si le régime auquel intervient la diminution d'avance est voisin du régime maximal, soit une dégradation des performances du moteur si ce régime d'intervention est inférieur au régime maximal autorisé.

L'invention vise à fournir un procédé de limitation du régime d'un moteur combustion interne qui permette d'obtenir une limitation très rapide du régime d'un moteur à sa valeur maximale tout en évitant les inconvénients des solutions antérieures précitées.

A cet effet, l'invention a pour objet un procédé de limitation du régime d'un moteur à combustion interne à dispositif électronique d'allumage comprenant au moins un organe de stockage d'énergie normalement chargé électriquement au moins jusqu'à l'emmagasinage d'une énergie nominale et des moyens d'application de ladite énergie à au moins un organe d'allumage associé un cylindre du moteur, procédé dans lequel au delà du régime maximal autorisé du moteur, on réduit le temps ou l'angle de charge de l'organe de stockage d'énergie, et caractérisé en ce que, pour un régime moteur supérieur ou égal au régime maximal autorisé, on génère un temps ou un angle de charge dont le niveau est maintenu à une valeur inférieure non nulle mais sensiblement plus faible que la valeur nécessaire à l'obtention de ladite énergie nominale. Il est entendu que l'énergie nominale correspond à l'énergie maximale suffisante pour amorcer l'arc d'étincelle et maintenir celui-ci pendant le temps nécessaire à la bonne combustion du mélange dans les configurations de marche normale du moteur.

Selon une variante de l'invention l'angle d'allumage est réduit de façon sensiblement simultanée à la génération du temps ou de l'angle de charge de niveau maintenu à ladite valeur inférieure non nulle. Grâce à l'action combinée de la réduction de temps de charge et de la réduction de l'angle d'allumage (qu'il n'est pas nécessaire de mettre à zéro) on obtient une diminution rapide du couple du moteur sans pour autant risquer de dégrader les performances du moteur en dessous du régime maximal autorisé.

L'invention a également pour objet un dispositif pour la mise en oeuvre du procédé ci-dessus, associé à un dispositif électronique d'allumage comprenant des moyens électroniques de génération du temps de charge de l'organe de stockage d'énergie, caractérisé en ce qu'il comprend des moyens de détection du régime maximal autorisé du moteur et un circuit électronique placé par lesdits moyens de détection dans un premier état inactif lorsque le régime moteur est inférieur au régime maximal autorisé et dans un second état actif où il commande la génération d'un temps ou angle dont le niveau est maintenu à ladite valeur inférieure par lesdits moyens de génération lorsque le régime moteur est égal ou supérieur au régime maximal autorisé.

De préférence, comme connu en soi, l'organe de stockage d'énergie et les moyens d'application de ladite énergie à au moins un organe d'allumage comprennent respectivement le bobinage primaire et le bobinage secondaire d'une bobine d'allumage.

Suivant une caractéristique, le dispositif est associé à un dispositif électronique d'allumage comprenant des moyens de limitation du courant dans le bobinage primaire à une valeur correspondant à l'obtention de ladite énergie nominale, des moyens de mesure du temps ($t_c$ mesuré) strictement nécessaire à l'obtention de l'énergie nominale dans le bobinage primaire et des moyens de génération engendrant un temps ou angle de conduction du bobinage primaire qui présente soit une valeur fonction dudit temps mesure ($t_c$ mesuré) au cycle d'allumage précédent, soit une valeur inférieure en l'absence de mesure dudit temps, caractérisé en ce que ledit circuit est constitué par des moyens adaptés pour inhiber les moyens de mesure lorsque ledit circuit est rendu actif par lesdits moyens de détection et en ce que ladite valeur minimale soit, pour un régime du moteur supérieur ou égal au régime maximal autorisé, non nulle mais sensiblement plus faible que la valeur nécessaire à l'obtention de ladite énergie nominale.

Suivant une autre caractéristique, le dispositif est associé à des moyens de mesure comprenant un moyen qui compare une tension image du courant dans le bobinage primaire à une tension de seuil ($V_s$) et dont la sortie prend un premier état logique lorsque ladite tension image est supérieure à la tension de seuil ($V_s$) et un second état logique opposé dans le cas contraire, caractérisé en ce que lesdits moyens d'inhibition sont agencés pour forcer la sortie du moyen de comparaison à son premier état logique lorsqu'ils sont rendus actifs par les moyens de détection.

Suivant encore une autre caractéristique, le moyen de comparaison a son entrée de comparaison connectée à un pont diviseur délivrant ladite tension image et les moyens d'inhibition comprenant une diode dont la cathode est connectée à ladite entrée de comparaison et dont l'anode est connectée à une tension de référence ($V_{ref}$ par l'intermédiaire d'une résistance et à la masse par l'intermédiaire de la jonction collecteur-émetteur d'un transistor dont la base est attaquée par lesdits moyens de détection pour le rendre conducteur lorsque le régime du moteur est inférieur au régime maximal autorisé et le bloquer dans le cas contraire.

D'autres caractéristiques et avantages de l'invention ressortiront de la description qui va suivre d'un mode de réalisation donné uniquement à titre d'exemple et illustré par les dessins annexés sur lesquels :

- la figure 1 est un schéma électrique d'un dispositif de limitation de régime moteur associé à un dispositif éléctronique de commande d'allumage inductif,

- la figure 2 est un chronogramme montrant des signaux apparaissant en différents points du shéma de la figure 1.

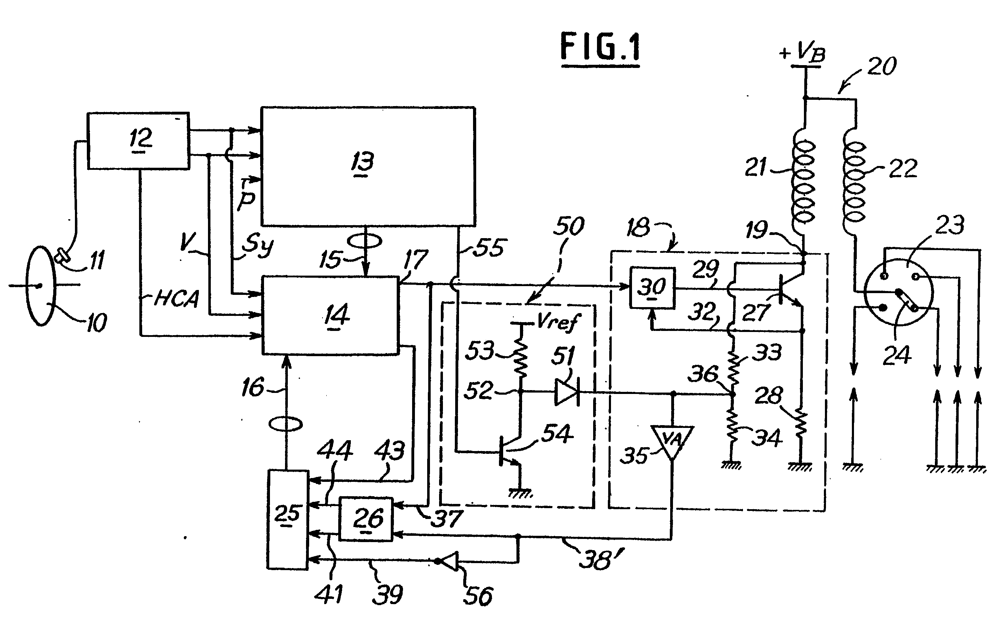

A la figure 1, un calculateur d'avance à l'allumage 13 reçoit sur une première entrée un signal de synchronisation $S_y$ et, sur une seconde entrée, un signal de vitesse V, signaux qui sont obtenus à partir d'un étage de traitement 12 du signal prélevé par un capteur 11 de position détectant le passage des dents dont est munie à sa périphérie une cible 10 fixée sur le villebrequin du moteur et tournant en synchronisme avec lui. Le capteur 11 donne une image électrique permanente de la périphérie de la cible 10. Le calculateur 13 reçoit également sur une troisième entrée un signal de pression P, délivré par un capteur (non représenté) fournissant une image de la pression de l'air à l'admission du moteur. Le calculateur 13 calcule, en fonction de la vitesse et de la pression à l'admission du moteur, une valeur brute d'angle d'avance à l'allumage qui est appliquée par ses sorties 15, sous forme d'un nombre binaire exprimé en nombre de dents de la cible 10 et en nombre de subdivisions d'entre deux dents, aux entrées correspondantes d'un bloc 14 de génération du signal de commande d'une bobine d'allumage.

Le bloc 14 reçoit également sur ses entrées 16 un second nombre binaire représentatif de l'angle de mise en conduction de la bobine exprimé en nombre de dents de la cible 10. Ces deux nombres binaires sont traités par le bloc 14 au moyen de trois types de signaux délivrés par le bloc 12 de traitement du signal capteur : le signal de synchronisation $S_y$ , le signal de vitesse V et un signal HCA.

Le bloc 14 de génération du signal de commande de la bobine fournit sur sa sortie 17 un signal de faible puissance qui est transmis à un étage de puissance 18 dont la sortie 19 est reliée à la bobine d'allumage 20 ayant un enroulement primaire 21 et un enroulement secondaire 22 relié par une de ses extrémités à la partie centrale d'un distributeur 23 autour de laquelle tourne un bras mobile 24 qui met successivement en contact au cours de sa rotation le secondaire 22 de la bobine d'allumage 20 avec les bougies des différents cylindres du moteur pour provoquer l'explosion et la combustion du mélange contenu dans les cylindres.

Le dispositif décrit jusqu'à présent est identique à celui objet du brevet FR.A. 2 474 597, à ceci près que le nombre binaire représentatif de l'angle de conduction de la bobine appliqué aux entrées 16 du bloc 14 n'est pas élaboré par le calculateur 13 mais par des circuits 25 et 26 explicités ci-après. On se reportera donc ce brevet français en ce qui concerne la description détaillée du fonctionnement du dispositif précité.

Les circuits 25 et 26 correspondent, eux, sensiblement au dispositif décrit dans le brevet européen EP.A.51 529 et illustré notamment à la figure 4 de ce brevet. C'est ainsi que dans ce brevet européen, l'étage de sortie du calculateur d'allumage désigné par la référence 2 correspond aux blocs 14 et 18 de la présente demande, le circuit 36 correspond, à une modification près, au circuit 26 de la présente demande et le reste du circuit de la figure 4 est représenté dans la présente demande par le circuit 25. Les entrées 39,41,43 et 44 du circuit 25 reçoivent les mêmes signaux que ceux véhiculés sur les conducteurs désignés par les mêmes références dans le brevet EP.A. 51 529 et les sorties 16 du circuit 25 correspondent aux sorties 31 de la mémoire 29 de ce brevet européen.

Les circuits 26 de la présente demande et 36 du brevet européen reçoivent en 37 le même signal de commande du temps de conduction de la bobine d'allumage mais le signal appliqué par 38' au circuit 26 (présente demande) est différent du signal 38 appliqué au circuit 36 (EP.51 529). Le signal 38' généré par l'étage de puissant 18 est l'inverse du signal de la ligne 1'4 de la figure 5 véhiculé par le conducteur 39 de la figure 4 du brevet européen EP.A. 51 529. Le signal présent en 38' est donc inversé en 56 pour donner en 39 le même signal 1'4 que dans le brevet européen précité.

Les circuits 26 de la présente demande et 36 du brevet EP.A. 51 529 sont constitués tous deux par des combinaisons élémentaires de bascules et de monostables qui ne diffèrent que par des détails de réalisation à la portée d'un homme de l'art. Ces modifications sont parfaitement transparentes vis-à-vis du fonctionnement des circuits 25 et 26 de la présente demande et du dispositif du brevet Européen EP.A. 51 529 de sorte que l'on se reportera à ce dernier pour une description détaillée dudit fonctionnement.

L'étage de puissance 18 comprend un transistor de commutation de puissance 27 dont le collecteur est connecté à la tension batterie + $V_b$ par l'intermédiaire du primaire 21 de la bobine 20 et dont l'émetteur est connecté à la masse par l'intermédiaire d'une résistance 28 de mesure du courant dans le primaire de la bobine. La base du transistor 27 est

connectée par un étage 30 de commande du transistor et de limitation du courant dans le primaire de la bobine 20. Cet étage 30 est connecté à la sortie 17 du bloc 14 qui lui applique le signal de commande de temps de conduction de la bobine et à l'émetteur du transistor 27 par un conducteur 32 qui délivre un signal image du courant dans le primaire 21 de la bobine 20.

Le collecteur du transistor 27 est connecté à la masse par l'intermédiaire d'un pont diviseur constitué de deux résistances en série 33 et 34. Le point commun 36 à ces deux résistances est connecté à l'entrée d'un comparateur 35 dans lequel la tension présente en 36 est comparée à une tension de seuil $V_s$ et la sortie du comparateur 35 est connectée à l'entrée du circuit 26 par le conducteur 38'.

L'ensemble de l'étage de puissance 18 ainsi que les éléments qui le composent sont classiques et il n'y a pas lieu d'en donner une description plus détaillée.

Le dispositif de limitation de régime 50 associé au dispositif de commande d'allumage décrit précédemment comprend une diode signal 51 dont la cathode est connectée à l'entrée du comparateur 35 et dont l'anode est connectée en 52 à une tension de référence $V_{réf}$ par l'intermédiaire d'une résistance 53 et à la masse par l'intermédiaire de la jonction collecteur-émetteur d'un transistor 54. La base du transistor 54 est attaquée en 55 par une sortie du calculateur 13 qui est programmé pour bloquer le transistor 54 lorsque le régime du moteur est supérieur ou égal au régime maximal autorisé et le rendre conducteur dans le cas contraire.

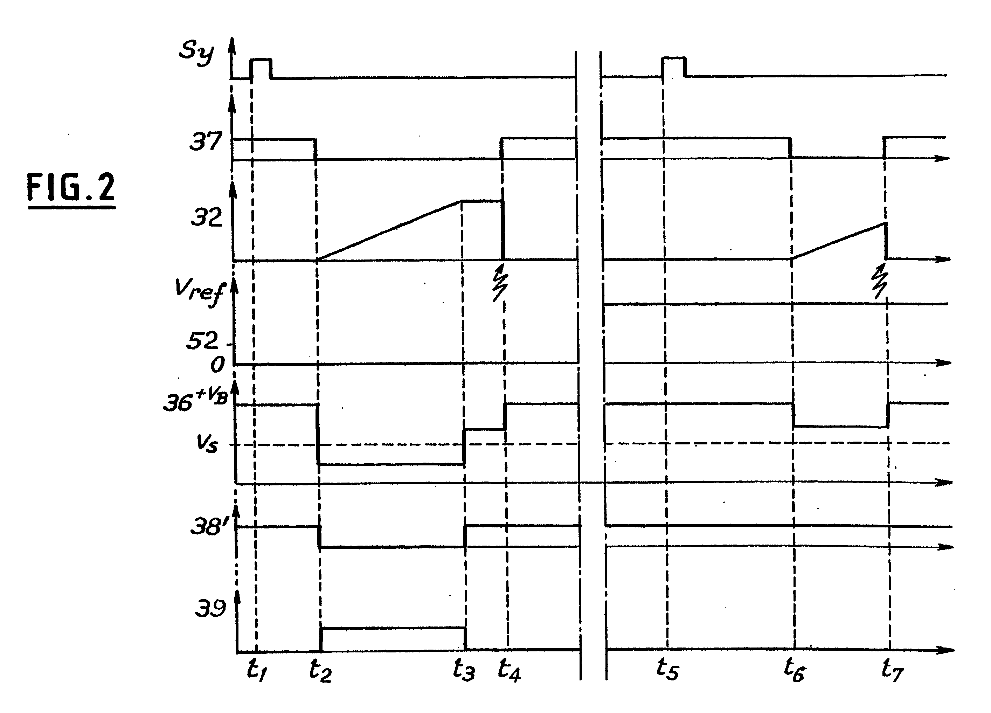

Le fonctionnement du dispositif décrit ci-dessus sera maintenant explicité en se référant également au chronogramme de la figure 2 sur lequel les différents signaux ont été identifiés par les références numériques des conducteurs qui les véhiculent.

L'étage 12 génère à chaque point mort haut d'un piston ou dans une position angulaire prédéterminée par rapport au point mort haut le signal $S_y$ qui apparaît à l'instant $t_1$. A l'instant $t_2$ calculé par le bloc 14 en fonction du temps de conduction optimal de la bobine déterminé par les circuits 25, 26 comme décrits dans les brevets FR.A. 2 474 597 et EP.A. 51 529, le bloc 14 génère en 17 le signal 37 qui, appliqué à l'étage 30, rend conducteur le transistor 27 et permet le passage du courant dans le primaire 21 de la bobine 20. Le signal 32 image du courant dans le primaire de la bobine croît jusqu'à l'instant $t_3$ où, le courant nominal correspondant à l'énergie nominale de la bobine étant atteint, l'étage 30 commence à réguler le transistor 27. Le courant dans la bobine est alors maintenu à sa valeur nominale jusqu'à l'instant $t_4$ où, le signal 37 repassant au niveau haut, le transistor 27 est bloqué par l'étage 30 et une étincelle apparaît aux bornes de la bougie sélectionnée par le bras mobile 24.

Pendant cette phase de fonctionnement comprise entre les instant $t_1$ et $t_4$, le régime du moteur est supposé être inférieur à sa valeur maximale autorisée de sorte que le calculateur 13 émet en 55 un signal qui rend conducteur le transistor 54. Le point 52 est alors sensiblement à la masse et la diode 51 est polarisée en inverse. A l'instant $t_2$ de mise en conduction de la bobine, la tension en 36 chute au-dessous de la tension de seuil $V_s$ comparateur 35 dont la sortie 38' passe d'un niveau haut à un niveau bas.

Le signal 38' reste au niveau bas jusqu'à l'instant $t_3$ où, le courant étant désormais limité dans le primaire de la bobine 20, la tension en 36 remonte au-dessus du seuil $V_s$ du comparateur 35 dont la sortie 38' repasse au niveau haut. La période $t_2$-$t_3$ du signal 38' représente donc le temps de conduction $t_c$ mesuré strictement nécessaire à l'obtention de l'énergie nominale aux bornes de la bobine qui est utilisé par les circuits 25 et 26 pour calculer et engendrer un temps de conduction optimal au cycle d'allumage suivant comme décrit au brevet EP.A. 51 529.

On a représenté également sur la figure 2 un deuxième cycle de conduction et d'allumage qui se déroule dans une situation où le moteur a dépassé son régime maximal autorisé. Le signal appliqué en 55 par le calculateur 13 a alors bloqué le transistor 54 et le point 52 est à la tension $V_{réf}$.

A l'instant $t_5$ apparaît le signal $S_y$, puis l'instant $t_6$ le transistor 27 est rendu conducteur et la tension en 36 chute. La tension $V_{réf}$ est choisie de manière à être supérieure à la tension en 36 quand le primaire de la bobine 20 est en conduction de sorte que la diode 51 est polarisée dans le sens direct. La tension de référence $V_{réf}$, supérieure à la tension de seuil $V_s$, est appliquée à l'entrée du comparateur 35 dont la sortie 38' reste, par conséquent, au niveau haut.

Dans ces conditions, les circuits 25-26 interprètent le signal 38' comme correspondant à une absence du signal de temps de conduction mesuré et vont engendrer au cycle d'allumage suivant, c'est à dire de façon quasiment instantanée, un temps de conduction de substitution comme décrit dans le brevet EP.A. 51 529. Ce temps de conduction de substitution qui peut être variable est choisi pour rester à une valeur inférieure non nulle mais sensiblement plus faible que la valeur nécessaire à l'obtention de ladite énergie nominale. A titre d'exemple non limitatif le calculateur 14 génère une fois atteint le seuil de 6000t/mn un temps de conduction correspondant à un angle de conduction fixe de l'ordre d'une vingtaine de degrés. Il en résultera la génération d'une étincelle de plus faible énergie qui contribuera à diminuer le couple du moteur et à le décélérer.

A l'instant $t_7$ du cycle en cours, le signal 37 repasse au niveau haut et une étincelle est engendrée entre les électrodes de l'une des bougies. Dans l'exemple de la figure 2, le courant nominal n'a pas été atteint dans la bobine à l'instant $t_7$ et la période $t_6$-$t_7$ correspond au temps de substitution de la conduction de la bobine, temps qui est maintenu à son niveau inférieur. Ceci suppose que le régime maximal autorisé du moteur avait déjà été atteint au cycle d'allumage précédent et que, par conséquent, les circuits 25-26 avaient déjà perçu en 38' l'absence du signal de temps de conduction mesuré.

Si un tel n'était pas le cas, le signal 32 présenterait la même allure que pendant la période $t_3$-$t_4$, avec un palier de régulation, et le premier temps de conduction de substitution serait engendré au cycle suivant.

Le temps de conduction de la bobine reste ensuite maintenu à une valeur inférieure tant que le régime du moteur demeure supérieur au régime maximal autorisé, cette réduction de l'énergie de l'arc électrique généré pouvant être combinée simultanément avec une réduction de l'angle d'avance à l'allumage. L'action combinée de la réduction du temps (ou de l'angle) de charge et de l'angle d'allumage permet d'obtenir une réduction rapide du couple-moteur. L'angle d'allumage réduit qui peut rester supérieur à zéro et le régime moteur pour lequel intervient la réduction de l'angle d'allumage sont choisis selon les caractéristiques du moteur. Le régime moteur de réduction de l'angle est souvent choisi égal au régime maximal autorisé. Il peut dans certaines configurations être légèrement inférieur à ce régime maximal autorisé (donc survenir un peu plus tôt que la réduction du temps de charge).

En tout état de cause la réduction de I énergie de l'étincelle s'avère plus efficace que la seule réduction de l'angle d'avance à l'allumage pour limiter très rapidement le régime du moteur dès qu'il atteint sa valeur maximale.

Le dispositif de limitation de régime suivant l'invention est d'une réalisation particulièrement simple et peu coûteuse lorsqu'il est combiné à un dispositif d'allumage électronique qui comporte déjà la possibilité de détecter le régime moteur et de commander le temps ou l'angle de conduction de la bobine. Cependant, l'invention n'est pas limitée à la forme de réalisation décrite, tant en ce qui concerne le dispositif de limitation de régime proprement dit que le dispositif d'allumage auquel il est associé qui pourrait être, par exemple, de type capacitif et non inductif.

## Revendications

1. Procédé de limitation du régime d'un moteur à combustion interne à dispositif électronique d'allumage comprenant au moins un organe de stockage d'énergie normalement chargé électriquement au moins jusqu'à l'emmagasinage d'une énergie nominale et des moyens d'application de ladite énergie à au moins un organe d'allumage associé à un cylindre du moteur, procédé dans lequel au delà du régime maximal autorisé du moteur on réduit le temps ou l'angle de charge de l'organe de stockage d'énergie, caractérisé en ce que, pour un régime moteur supérieur ou égal au régime maximal autorisé, on génère un temps ou un angle de charge dont le niveau est maintenu à une valeur inférieure non nulle mais sensiblement plus faible que la valeur nécessaire l'obtention de ladite énergie nominale.

2. Procédé selon la revendication 1 caractérisé en ce que l'angle d'avance à l'allumage est réduit de façon sensiblement simultanée à la génération du temps ou de l'angle de charge de niveau maintenu à ladite valeur inférieure non nulle.

3. Dispositif pour la mise en oeuvre du procédé selon l'une des revendications précédentes, associé à un dispositif électronique d'allumage comprenant des moyens électroniques (14,25,26) de génération du temps de charge de l'organe de stockage d'énergie (21), caractérisé en ce qu'il comprend des moyens (10,13) de détection du régime maximal autorisé du moteur et un circuit électronique (50) placé par lesdits moyens de détection dans un premier état inactif lorsque le régime moteur est inférieur au régime maximal autorisé et dans un second état actif où il commande la génération d'un temps ou angle dont le niveau est maintenu à ladite valeur inférieure par lesdits moyens de génération lorsque le régime moteur est égal ou supérieur au régime maximal autorisé.

4. Dispositif selon la revendication 3, caractérisé en ce que, comme connu en soi, l'organe de stockage d'énergie et les moyens d'application de ladite énergie à au moins un organe d'allumage comprennent respectivement le bobinage primaire (21) et le bobinage secondaire (22) d'une bobine d'allumage (20).

5. Dispositif selon la revendication 4, associé à un dispositif électronique d'allumage comprenant des moyens (27,30) de limitation du courant dans le bobinage primaire (21) à une valeur correspondant à l'obtention de ladite énergie nominale, des moyens (33,35) de mesure de temps ($t_c$ mesuré) strictement nécessaire à l'obtention de l'énergie nominale dans le bobinage primaire et des moyens de génération (14,25,26) engendrant un temps ou angle de conduction du bobinage primaire qui présente soit une valeur fonction dudit temps mesuré ($t_c$ mesuré) au cycle d'allumage précédent, soit une valeur dite inférieure en l'absence de mesure dudit temps, caractérisé en ce que ledit circuit (50) est constitué par des moyens (51,54) adaptés pour inhiber les moyens (33,35) de mesure lorsque ledit circuit est rendu actif par lesdits moyens de détection (10,13) et en ce que ladite valeur inférieure soit, pour un régime du moteur supérieur ou égal au régime maximal autorisé, non nulle mais sensiblement plus faible que la valeur nécessaire à l'obtention de ladite énergie nominale.

6. Dispositif selon la revendication 5, associé à des moyens de mesure (33,35) comprenant un moyen (35) qui compare une tension (36) image du courant dans le bobinage primaire (21) à une tension de seuil ($V_s$ et dont la sortie prend un premier état logique lorsque ladite tension image (36) est supérieure à la tension de seuil ($V_s$) et un second état logique opposé dans le cas contraire, caractérisé en ce que lesdits moyens d'inhibition (51,54) sont agencés pour forcer la sortie du moyen de comparaison (35) son premier état logique lorsqu'ils sont rendus actifs par les moyens de détection (10,13).

7. Dispositif selon la revendication 6, caractérisé en ce que le moyen de comparaison (35) a son entrée de comparaison connectée à un pont diviseur (33,34) délivrant ladite tension image et en ce que les moyens d'inhibition comprenant une diode (51) dont la cathode est connectée à ladite entrée de comparaison et dont l'anode (52) est connectée une tension de référence ($V_{réf}$) par l'intermédiaire d'une résistance (53) et à la masse par l'intermédiaire de la jonction collecteur-émetteur d'un transistor (54) dont la base est attaquée par lesdits moyens de détection (10,13) pour le rendre conducteur lorsque le régime du moteur est inférieur au régime maximal autorisé et le bloquer dans le cas contraire.

8. Dispositif pour la mise en oeuvre du procédé selon la revendication 2 associé à un dispositif électronique d'allumage comprenant des moyens électroniques (14,25,26) de génération du temps de charge de l'organe de stockage d'énergie (21), caractérisé en ce qu'il comprend des moyens (10,13) de détection du régime maximal autorisé du moteur, un circuit électronique (50) placé par lesdits moyens de détection dans un premier état inactif lorsque le régime moteur est inférieur au régime maximal autorisé et dans un second état actif où il commande la génération d'un temps ou angle dont le niveau est maintenu à ladite valeur inférieure par lesdits moyens de génération lorsque le régime moteur est égal ou supérieur au régime maximal autorisé et de moyens pour réduire l'angle d'allumage de façon sensiblement simultanée à la mise dans ledit second état actif dudit circuit électronique.

**Claims**

1. Process for limiting the running speed of an internal combustion engine with an electronic ignition device comprising at least one energy storage member which is normally charged electrically so as to store at least a nominal quantity of energy and means for applying the said energy to at least one ignition component which is associated with a cylinder of the engine, in which process, beyond the permitted maximum running speed of the engine, the time or charging angle of the energy storage member is reduced, characterized in that, when the running speed of the engine is greater than or equal to the maximum permitted running speed, a time or charging angle is generated, the level of which is held at a lower non-zero value which is significantly less than the value necessary to produce the said nominal quantity of energy.

2. Process according to Claim 1, characterized in that the ignition advance angle is reduced substantially simultaneously with the generation of the time or charging angle at a level maintained at the said lower non-zero value.

3. Device for putting into operation the process according to one of the preceding claims, associated with an electronic ignition device which comprises electronic means (14, 25, 26) for generating the charging time of the energy storage member (21), characterized in that it comprises means (10, 13) for detecting the maximum permitted running speed of the engine and an electronic circuit (50) which is put, by the said detecting means, into a first inactive state when the engine running speed is less than the maximum permitted running speed and into a second active state in which it controls the generation of a time or angle, the level of which is held at the said lower value by the said generating means when the engine running speed is equal to or greater than the maximum permitted running speed.

4. Device according to Claim 3, characterized in that, as is in itself known, the energy storage member and the means for applying the said energy to at least one ignition component comprise the primary winding (21) and the secondary winding (22), respectively, of an ignition coil (20).

5. Device according to Claim 4, associated with an electronic ignition device comprising means (27, 30) for limiting the current in the primary winding (21) to a value which corresponds to the production of the said nominal quantity of energy, means (33, 35) for measuring the time ($t_c$ measured) which is precisely that necessary to produce the nominal quantity of energy in the primary winding and generating means (14, 25, 26) for generating a conducting time or angle of the primary winding which either has a value which is a function of the said time measured ($t_c$ measured) at the previous ignition cycle, or has a so-called lower value in the absence of a measurement of the said time, characterized in that the said circuit (50) consists of means (51, 54) which are adapted so as to inhibit the measuring means (33, 35) when the said circuit is rendered active by the said detecting means (10, 13), and in that, for a running speed of the engine greater than or equal to the maximum permitted running speed, the said lower value is non-zero, but substantially lower than the value necessary for obtaining the said nominal quantity of energy.

6. Device according to Claim 5, associated with measuring means (33, 35) which comprise a means (35) which compares a voltage (36) which is an image of the current in the primary winding (21) with a threshold voltage ($V_s$) and whose output shows a first logic state when the said voltage image (36) is greater than the threshold voltage ($V_s$) and a second opposite logic state in the opposite case, characterized in that the said inhibiting means (51, 54) are arranged so as to force the output of the comparing means (35) into its first logic state when they are rendered active by the detecting means (10, 13).

7. Device according to Claim 6, characterized in that the comparing means (35) has its comparing input connected to a dividing bridge (33, 34) which delivers the said voltage image and in that the inhibiting means comprise a diode (51) whose cathode is connected to the said comparing input and whose anode (52) is connected to a reference voltage ($V_{ref}$) through the intermediary of a resistance (53) and to earth through the intermediary of the collector-emitter junction of a transistor (54) whose base is driven by the said detecting means (10, 13) so as to render it conducting when the engine running speed is less than the maximum permitted running speed and to shut it off in the opposite case.

8. Device for putting into operation the process according to Claim 2, associated with an electronic ignition device which comprises electronic means (14, 25, 26) for generating the charging time of the energy storage member (21), characterized in that it comprises means (10, 13) for detecting the maximum permitted running speed of the engine and an electronic circuit (50) which is put, by the said detecting means, into a first inactive state when the engine running speed is less than the maximum permitted running speed and into a second active state in which it controls the generation of a time or angle, the level of which is held at the said lower value by the said generating means when the engine running speed is equal to or greater than the maximum permitted running speed and means for reducing the ignition angle substantially simultaneously with the putting of the said electronic circuit into the said second active state.

## Patentansprüche

1. Verfahren zur Begrenzung der Drehzahl einer Brennkraftmaschine, mit einer elektronischen Zündanlage mit wenigstens einem Energiespeicher, dessen Speicherenergie normalerweise elektrisch auf einen Nominalwert aufgeladen wird, und mit Entlademitteln zur Entladung dieser Energie über mindestens ein Zündorgan, das mit einem Zylinder der Brennkraftmaschine verbunden ist, wobei oberhalb einer maximal zulässigen Grenzdrehzahl die Aufladedauer des Energiespeichers – Zeit oder Winkel – reduziert wird, dadurch gekennzeichnet, daß die Aufladedauer bei einer Motordrehzahl gleich der oder größer als die Grenzdrehzahl auf einem Niedrigwert gehalten wird, der ungleich Null jedoch fühlbar kleiner ist als eine Normaldauer, die zum Aufladen des Energiespeichers auf den Nominalwert erforderlich ist.

2. Verfahren nach Anspruch 1, dadurch gekennzeichnet, daß der Zündwinkel fühlbar reduziert wird und zwar gleichzeitig mit der Erzeugung der Aufladedauer mit dem genannten Niedrigwert ungleich Null.

3. Einrichtung zur Durchführung des Verfahrens gemäß einem der vorangehenden Ansprüche in Verbindung mit einer elektronischen Zündanlage, enthaltend elektronische Steuermittel (14, 25, 26) zum Erzeugen der Aufladedauer zum Aufladen des Energiespeichers (21), dadurch gekennzeichnet, daß Fühlermittel (10, 13) zur Ermittlung der maximal zulässigen Grenzdrehzahl der Brennkraftmaschine und ein elektronischer Kreis (50) vorgesehen sind, wobei der elektronische Kreis (50) durch die Fühlermittel in einen Inaktivzustand versetzt wird, wenn die Drehzahl der Brennkraftmaschine unter der Grenzdrehzahl liegt und der in einen Aktivzustand versetzt wird, in dem er die Erzeugung der Aufladedauer mit dem genannten Niedrigwert durch die genannten Steuermittel steuert, wenn die Drehzahl gleich oder größer als die Grenzdrehzahl ist.

4. Einrichtung nach Anspruch 3, dadurch gekennzeichnet, daß der Energiespeicher und die Entlademittel zur Entladung der Energie über wenigstens ein Zündorgan in an sich bekannter Weise die Primärwicklung (21) und die Sekundärwicklung (22) einer Zündspule (20) einschließen.

5. Einrichtung nach Anspruch 4, in Verbindung mit einer elektronischen Zündanlage mit Begrenzungsmitteln (27, 30) zur Begrenzung des Stromes durch die Primärwicklung (21) auf einen Wert, der dem Erreichen des Nominalwertes der gespeicherten Energie entspricht, mit Meßmitteln (33, 35) zur Messung der Normaldauer, die zur Aufladung der Primärwicklung auf den Nominalwert notwendig ist, und mit Steuermitteln (14, 25, 26) zum Erzeugen der Aufladedauer der Primärwicklung mit einem Wert, der entweder von der Normaldauer gemessen im vorhergehenden Zündzyklus, abhängig ist oder, bei Fehlen dieser Normaldauer, den Niedrigwert hat, dadurch gekennzeichnet, daß der elektronische Kreis (50) Sperrmittel (51, 54) enthält, die die Meßmittel (33, 35) sperren, wenn der Kreis durch die Fühlermittel (10, 13) aktiv gesteuert ist, und daß der Niedrigwert ungleich Null jedoch fühlbar kleiner als die Normaldauer ist, die zum Speichern des Nominalwertes der Energie nötig ist, wenn die Drehzahl größer oder gleich der Grenzdrehzahl ist.

6. Einrichtung nach Anspruch 5, wobei die Meßmittel (33, 35) einen Komparator (35) enthalten zum Vergleichen einer Bildspannung (36), die ein Abbild des Stromes durch die Primärwicklung (21) ist, mit einer Schwellenspannung ($V_s$), wobei der Komparator am Ausgang einen ersten logischen Wert hat, wenn die Bildspannung (36) größer als die Schwellenspannung ($V_s$) ist, und einen zweiten logischen Zustand im entgegengesetzten Fall hat, dadurch gekennzeichnet, daß die genannten Sperrmittel (51, 54) den Ausgang des Komparators (35) auf seinen ersten logischen Zustand zu steuern, wenn sie durch die Fühlermittel (10, 13) aktiviert sind.

7. Anordnung nach Anspruch 6, dadurch gekennzeichnet, daß ein Vergleichseingang des Komparators (35) an den Abgriff eines Spannungsteilers (33, 34) angeschlossen ist, der die genannte Bildspannung liefert, und daß die Sperrmittel eine Diode (51) enthalten, deren Kathode an den Vergleichseingang und deren Anode (52) über einen Widerstand (53) an eine Referenzspannung ($V_{ref}$) und an die Masse über die Kollektor-Emitter-Strecke eines Transistors (54) angeschlossen ist, dessen Basis von den Fühlermitteln (10, 13) angesteuert wird, um ihn leitend zu machen, wenn die Motordrehzahl niedriger als die Grenzdrehzahl ist und ihn im umgekehrten Fall zu sperren.

8. Anordnung zur Durchführung des Verfahrens nach Anspruch 2 in Verbindung mit einer elektronischen Zündeinrichtung mit elektronischen Steuermitteln (14, 25, 26) zur Erzeugung einer Aufladedauer für den Energiespeicher (21), gekennzeichnet,
– durch Fühlermittel (10, 13) zur Ermittlung der Grenzdrehzahl,
– durch einen elektronischen Kreis (50), der durch die Fühlermittel in einen inaktiven Zustand gesteuert wird, wenn die Drehzahl niedriger als die Grenzdrehzahl ist und der in einen aktiven Zustand gesteuert wird, wo er die Erzeugung einer Aufladedauer steuert, die durch die Steuermittel auf dem genannten Niedrigwert gehalten wird, wenn die Motordrehzahl gleich der oder größer als die Grenzdrehzahl ist, und
– durch Mittel zur Reduzierung des Zündwinkels im wesentlichen zu derselben Zeit, da der elektronische Kreis in den aktiven Zustand gesteuert wird.

# FIG.1

EP 0 202 136 B1

# FIG.2

EP 0 202 136 B1